# DEMANDE DE BREVET EUROPEEN

(11) **EP 4 226 821 A1**
(43) Date de publication de la demande: **16.08.2023**
(21) Numéro de dépôt: 23155002.1
(22) Date de dépôt: 03.02.2023
(51) Int. Cl.: A47J 43/046, A47J 43/07

(54) **ENSEMBLE DE CUVE DE TRAVAIL POUR UN APPAREIL DE PREPARATION CULINAIRE**

(30) Priorité: 14.02.2022 FR 2201285
(71) Demandeur: SEB S.A., 69130 Ecully (FR)
(72) Inventeur: ALLEMAND, Bernard, 69134 ECULLY CEDEX (FR)
(74) Mandataire: SEB Développement

(57) **Abrégé**

Ensemble de cuve de travail pour un appareil de préparation culinair, comprenant :
- une cuve de travail (11), agencée pour recevoir des aliments à préparer, et comprenant :
• un trou de passage (111), agencé au fond de la cuve de travail (11),
• un palier de cuve, fixé à la cuve de travail (11) dans le trou de passage (111),

- un arbre tournant (21 ; 21A), supporté par le palier de cuve,
caractérisé en ce que l'ensemble de cuve de travail comprend des moyens de fixation réversible agencés pour recevoir de manière réversible :
• un outil de travail mobile (31) agencé pour s'accoupler avec l'arbre tournant (21 ; 21A) pour occuper une position de travail, ou
• un bouchon d'obturation agencé pour recouvrir l'arbre tournant (21 ; 21A).

## Description

### Domaine technique de l'invention

La présente invention concerne de manière générale un ensemble de cuve de travail destiné à être utilisé dans un appareil de préparation culinaire. L'invention concerne aussi l'appareil de préparation culinaire (un appareil ménager ou un robot ménager à utiliser pour préparer des aliments, c'est-à-dire les mélanger, couper, râper, malaxer, pétrir... et/ou cuire les aliments avec ou sans pression et/ou avec ou sans vapeur, et/ou les laisser mijoter...). Enfin, l'invention concerne aussi l'utilisation de cet appareil de préparation culinaire pour le mettre en configuration en vue d'effectuer une opération particulière ou une autre.

### État de la technique

Dans l'art antérieur des appareils de préparation culinaire, il est connu de pouvoir installer un outil de travail dans une cuve de travail pour effectuer une opération de préparation particulière, ou de ne pas installer d'outil de travail, comme le divulgue par exemple le document WO2017144907(A1). A cet effet, le système divulgué requiert d'installer dans un trou de passage de la cuve de travail l'outil de travail ou un bouchon pour obturer le trou de passage. Ces opérations peuvent être complexes, avec en particulier la nécessité de démonter toute la cuve de travail de l'appareil de préparation culinaire, et enfin, de nombreuses pièces sont nécessaires pour permettre ces accouplements.

### Exposé de l'invention

**Un** but de la présente invention est de répondre aux inconvénients de l'art antérieur mentionnés ci-dessus et en particulier, tout d'abord, de proposer un ensemble de cuve de travail pour un appareil de préparation culinaire qui simplifie les opérations de mise en place d'un outil de travail ou d'un bouchon d'obturation, tout en limitant la complexité de l'appareil, et/ou de son utilisation, et/ou en limitant le nombre de pièces du système.

Pour cela un premier aspect de l'invention concerne un ensemble de cuve de travail pour un appareil de préparation culinaire, comprenant :
- une cuve de travail, agencée pour recevoir des aliments à préparer, et comprenant :
   - un trou de passage, agencé au fond de la cuve de travail,
   - un palier de cuve, fixé à la cuve de travail dans le trou de passage,
      - un arbre tournant, supporté par le palier de cuve,
   caractérisé en ce que l'ensemble de cuve de travail comprend des moyens de fixation réversible agencés pour recevoir de manière réversible :
   - un outil de travail mobile agencé pour s'accoupler avec l'arbre tournant pour occuper une position de travail, ou
   - un bouchon d'obturation agencé pour recouvrir l'arbre tournant.

Selon la mise en oeuvre ci-dessus, les moyens de fixation réversible peuvent recevoir de manière réversible soit l'outil de travail, soit le bouchon d'obturation. En conséquence, l'utilisateur peut aisément mettre l'ensemble de cuve de travail dans une première configuration pour travailler des aliments avec un outil de travail, ou dans une deuxième configuration pour ne pas travailler les aliments avec un outil de travail, c'est-à-dire pour simplement les préparer (par exemple les cuire) sans outil mobile. Dans la deuxième configuration de l'ensemble de cuve, le bouchon recouvre l'arbre tournant resté solidaire de la cuve de travail. Autrement dit, un porte-outil, qui comprend notamment l'arbre tournant et/ou le palier de cuve, peut recevoir indifféremment l'outil de travail ou le bouchon d'obturation. De même, la cuve, munie de l'arbre tournant, reçoit indifféremment l'outil de travail ou le bouchon d'obturation. La fixation de l'arbre tournant, du palier de cuve (ou du porte-outil) sur la cuve de travail ne dépend pas de l'outil de travail ou du bouchon d'obturation : ceux-ci peuvent être librement accouplés ou retirés de l'ensemble de cuve de travail.

Selon un mode de réalisation, l'arbre tournant peut être libre en rotation par rapport à la cuve de travail. Typiquement, l'arbre tournant peut être monté sur le palier de cuve selon une liaison pivot.

Selon un mode de réalisation, l'arbre tournant peut ne pas être entraîné en rotation lorsque le bouchon d'obturation est monté. Selon ce mode de réalisation, lorsque le bouchon d'obturation est mis en place, le moteur d'entraînement de l'appareil de préparation culinaire est désactivé, car il n'y a pas d'outil de travail à entraîner. On peut prévoir des moyens de détection de présence du bouchon d'obturation et/ou de l'outil de travail mobile.

Selon un mode de réalisation, les moyens de fixation réversible peuvent comprendre :
- un accouplement tournant, solidaire de l'arbre tournant et agencé pour s'accoupler de manière réversible avec l'outil de travail mobile,
- un accouplement statique, solidaire de la cuve de travail et agencé pour s'accoupler de manière réversible avec le bouchon d'obturation. Selon cette mise en oeuvre, les interfaces d'accouplement du bouchon d'obturation et de l'outil de travail sont distinctes et séparées. En particulier, le bouchon d'obturation s'accouple sur une partie statique par rapport à la cuve de travail, et l'outil de travail mobile s'accouple sur une partie mobile par rapport à la cuve de travail.

Selon un mode de réalisation, l'accouplement tournant peut être formé par un alésage tournant ménagé dans l'arbre tournant et peut comprendre de préférence un arrêt en rotation entre l'outil de travail et l'arbre tournant. On peut prévoir un index dans une gorge, ou une contre forme non circulaire pour empêcher la rotation relative entre l'outil de travail et l'arbre tournant.

Selon un mode de réalisation, au moins l'un de l'arbre tournant et de l'outil de travail mobile peut comprendre un organe élastique débouchant dans l'alésage tournant et agencé pour maintenir l'outil de travail dans une position d'accouplement avec l'arbre tournant. En particulier, selon un mode de réalisation, l'organe élastique peut maintenir l'outil de travail dans une position particulière selon un axe Z, l'axe Z pouvant être un axe de rotation de l'outil de travail.

Selon un mode de réalisation, au moins l'autre de l'arbre tournant et de l'outil de travail mobile peut présenter un relief, de préférence en creux, agencé en regard de l'organe élastique lorsque l'outil de travail mobile est accouplé en position de travail avec l'arbre tournant. Le relief peut être une gorge.

Selon un mode de réalisation, l'outil de travail mobile peut comprendre un organe élastique agencé pour maintenir l'outil de travail dans une position d'accouplement avec l'arbre tournant. En particulier, selon un mode de réalisation, l'organe élastique peut maintenir l'outil de travail dans une position particulière selon un axe Z, l'axe Z pouvant être un axe de rotation de l'outil de travail.

Selon un mode de réalisation, l'arbre tournant peut présenter un relief, de préférence en creux, débouchant dans l'alésage de l'arbre tournant et agencé en regard de l'organe élastique de l'outil de travail lorsque l'outil de travail mobile est accouplé en position de travail avec l'arbre tournant. Le relief peut être une gorge.

Selon un mode de réalisation, l'ensemble de cuve de travail peut comprendre une cage statique agencée pour s'accoupler de manière réversible à la cuve de travail, et la cage statique peut supporter le palier de cuve. Le démontage de la cage statique peut permettre de nettoyer aisément les composants.

Selon un mode de réalisation, la cage statique peut traverser le trou de passage. Autrement dit, une fois montée sur la cuve de travail, la cage statique présente au moins une partie de chaque côté de la paroi de la cuve de travail.

Selon un mode de réalisation, la cage statique peut comprendre l'accouplement statique. Le bouchon d'obturation se monte sur une partie statique par rapport à la cuve de travail.

Selon un mode de réalisation, l'ensemble de cuve de travail peut comprendre un verrou, agencé pour s'engager de manière réversible avec la cage statique.

Selon un mode de réalisation, le verrou peut être du type % de tour, l'engagement verrou / cage statique peut être à baïonnette, ou à ergot/piste de came, vis/écrou. Selon un mode de réalisation, le verrou peut maintenir la cage statique sur la cuve. Ainsi, la mise en place de la cage statique (et donc du palier de cuve) est aisée et rapide.

Selon un mode de réalisation, la cage statique peut présenter un épaulement avec une face supérieure agencée dans la cuve de travail, et le fond de la cuve de travail peut présenter un renfoncement autour du trou de passage pour recevoir l'épaulement, avec de préférence une profondeur du renfoncement prévue pour positionner la face supérieure de l'épaulement de la cage statique au niveau du reste du fond de la cuve de travail. Autrement dit, la cage statique est affleurante avec le fond de la cuve de travail.

Selon un mode de réalisation, l'outil de travail peut présenter une forme centrale qui épouse le fond de la cuve.

Selon un mode de réalisation, le fond de la cuve est plat ou sensiblement plat, en particulier lorsque le bouchon d'obturation est installé.

Selon un mode de réalisation, la face supérieure de la cage statique peut comprendre au moins un évidement pour permettre à un utilisateur de saisir le bouchon d'obturation afin de le dégager des moyens de fixation réversible. Alternativement ou en addition, on peut prévoir aussi au moins un évidement sur ou sous le bouchon d'obturation pour permettre à un utilisateur de saisir le bouchon d'obturation.

Selon un mode de réalisation, l'ensemble de cuve de travail peut comprendre un joint statique de cage, agencé entre la cuve de travail et la cage statique.

Selon un mode de réalisation, le joint statique de cage peut être pris en sandwich entre l'épaulement de la cage statique et la cuve de travail, le verrou peut être agencé pour comprimer le joint statique de cage lors de son engagement avec la cage statique.

Selon un mode de réalisation au moins l'un de la cuve de travail et la cage statique peut comprendre des moyens d'arrêt en rotation, tels qu'un évidement, une encoche, une contreforme, agencés pour procurer un blocage en rotation de la bague statique sur la cuve de travail. On peut prévoir un trou de passage asymétrique, ou non circulaire, ou avec une patte, ou une encoche d'arrêt en rotation.

Selon un mode de réalisation, l'ensemble de cuve de travail peut comprendre au moins un joint tournant de cage, agencé entre la cage statique et l'arbre tournant, et de préférence entre l'arbre tournant et une paroi de la cage statique formant l'accouplement statique.

Selon un mode de réalisation, le palier de cuve peut comprendre un palier lisse et/ou au moins un roulement à billes, tel qu'un roulement à contact oblique. On peut prévoir un roulement étanche avec des flasques latérales d'étanchéité.

Selon un mode de réalisation, l'arbre tournant peut présenter un trou traversant. Le nettoyage est facilité.

Selon un mode de réalisation, l'ensemble de cuve de travail peut comprendre au moins un joint de palier, agencé entre le palier de cuve et l'arbre tournant.

Selon un mode de réalisation, l'ensemble de cuve de travail peut comprendre une noix d'entrainement accouplée à l'arbre tournant. La noix d'entrainement peut être agencée pour s'accoupler avec un arbre de sortie d'un moteur de l'appareil de préparation culinaire.

Selon un mode de réalisation, la noix d'entrainement peut être vissée sur l'arbre tournant. Selon un mode de réalisation, la noix d'entraînement peut être directement formée sur l'arbre tournant (en d'autres termes, l'arbre tournant et la noix d'entrainement peuvent être d'un seul tenant ou monobloc).

Selon un mode de réalisation, l'ensemble de cuve de travail peut comprendre le bouchon d'obturation et un joint fixe de bouchon, agencé entre le bouchon d'obturation et les moyens de fixation réversible.

Selon un mode de réalisation, l'ensemble de cuve de travail peut comprendre l'outil de travail mobile et un joint primaire d'outil, agencé entre l'outil de travail mobile et les moyens de fixation réversible.

Un deuxième aspect de l'invention se rapporte à un appareil de préparation culinaire, comprenant
- un ensemble de cuve de travail selon le premier aspect,
- le bouchon d'obturation,
- l'outil de travail mobile.

Selon un mode de réalisation, l'appareil de préparation culinaire peut comprendre des moyens d'étanchéité avec par exemple un couvercle de cuve, et/ou un joint de couvercle de cuve, et/ou un joint labyrinthe ou à lèvre en fond de cuve entre la cuve de travail et le bouchon d'obturation ou l'outil de travail, de sorte à permettre une cuisson sous pression.

Selon un mode de réalisation, l'appareil de préparation culinaire peut être un appareil de cuisson sous pression, par exemple jusqu'à une pression de 100 kPa.

### Description des figures

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
[fig. 1] représente une vue en perspective d'un ensemble de cuve de travail pour un appareil de préparation culinaire, qui comprend notamment une cuve de travail et une cage statique située au fond de la cuve de travail et supportant ou formant un palier de cuve ;
[fig. 2] représente une vue en perspective de l'ensemble de cuve de travail de la figure 1, avec un outil de travail disposé au fond de la cuve de travail et monté sur le palier de cuve ;
[fig. 3] représente une vue en perspective de l'ensemble de cuve de travail de la figure 1, avec un bouchon d'obturation disposé au fond de la cuve de travail et monté sur le palier de cuve ;
[fig. 4] représente une vue de dessus de la cuve de travail de la figure 1 ;
[fig. 5] représente une vue de côté de la cage statique de la figure 1 ;
fig. 6] représente une coupe transversale de l'ensemble de cuve de travail de la figure 2 ;
[fig. 7] représente une coupe transversale de l'ensemble de cuve de travail de la figure 3 ;
[fig. 8] représente une coupe transversale d'une variante de l'ensemble de cuve de travail de la figure 7.

### Description détaillée de mode(s) de réalisation

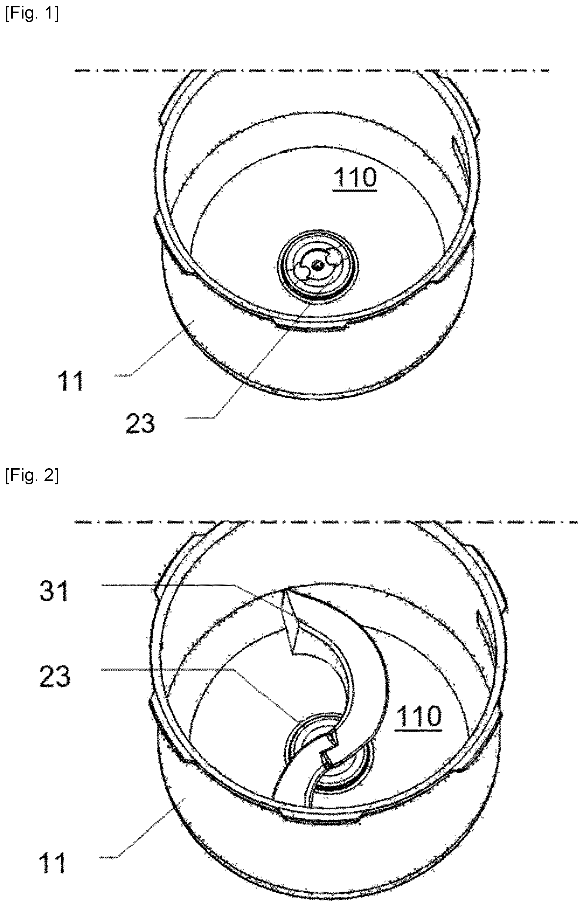

La figure 1 représente une vue en perspective d'un ensemble de cuve de travail pour un appareil de préparation culinaire, qui comprend notamment une cuve de travail 11 avec un fond 110, et un palier de cuve situé au fond de la cuve de travail 11 et supporté par une cage statique 23.

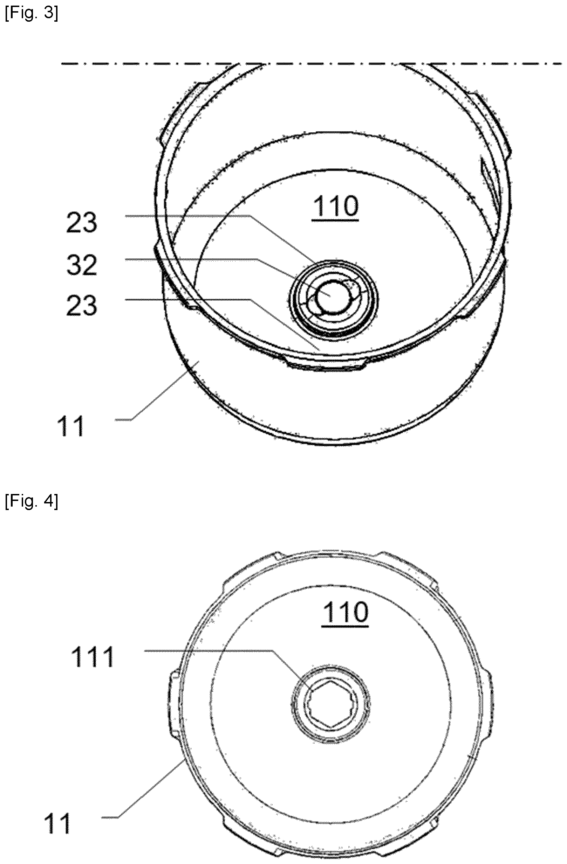

Le palier de cuve est prévu pour pouvoir recevoir indifféremment un outil de travail mobile 31 (ici une pale de brassage) comme le montre la figure 2, ou un bouchon d'obturation 32 comme le montre la figure 3.

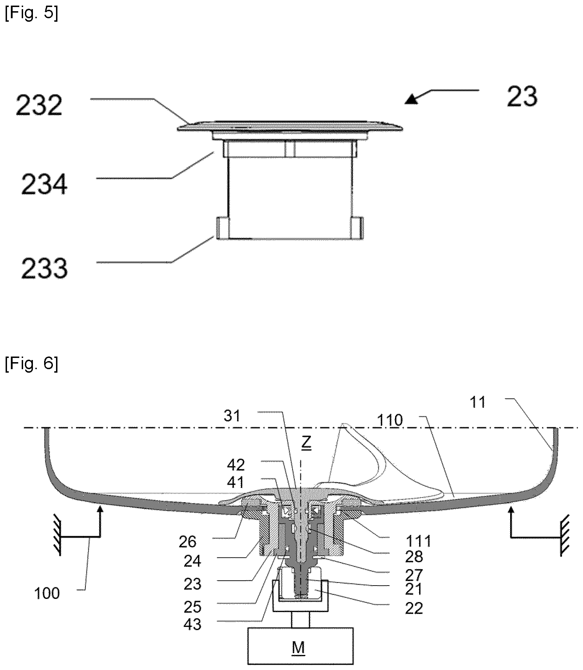

Comme le montre la figure 4, pour laisser passer les organes d'entraînement en rotation de l'outil de travail mobile 31, la cuve de travail 11 comprend un trou de passage 111 ménagé dans le fond 110. Le trou de passage 111 présente une forme polygonale avec des encoches, si bien que la cage statique 23 représentée figure 5 peut y être installée aisément. En effet, la cage statique 23 présente deux ergots inférieurs 233 qui peuvent passer au travers des encoches du trou de passage 111, et une contreforme 234 placée sous une tête épaulée 232 de la cage statique 23 peut s'engager et épouser la forme polygonale du trou de passage 111, si bien qu'un arrêt en rotation entre la cage statique 23 et la cuve de travail 11 est assuré.

Selon la présente invention, il est proposé de prévoir que le palier de cuve porté ou formé par la cage statique 23 puisse recevoir de façon réversible et simple l'outil de travail mobile 31 comme sur la figure 2, ou le bouchon d'obturation 32 comme sur la figure 3. A cet effet, la cage statique 23 est fixée sur la cuve de travail et présente une architecture dédiée, comme cela est montré figures 6 à 8.

La figure 6 représente une coupe transversale de l'ensemble de cuve de la figure 2. Comme montré de manière schématique, l'ensemble de cuve de travail est installé sur un boîtier 100 de l'appareil de préparation culinaire, et accouplé à un moteur M.

**Dans** le détail, l'ensemble de cuve de travail comprend :
- la cuve de travail 11, soutenue par le boîtier 100,
- la cage statique 23 qui traverse le trou de passage 111,
- un verrou 24, qui bloque et maintient la cage statique 23 en position sur la cuve de travail 11 via les ergots inférieurs 233 de la cage statique 23,
- un palier lisse 25, monté par exemple en force sur la cage statique 23,
- un arbre tournant 21 monté libre en rotation sur le palier lisse 25 et maintenu en place par exemple avec un anneau élastique 27,
- une noix d'entraînement 22 accouplée à l'arbre tournant 21, et engagée dans une tête d'arbre du moteur M,
- un joint statique de cage 26 agencé entre la tête épaulée de la cage statique 23 et la cuve de travail 11,
- l'outil de travail mobile 31, monté dans un alésage de l'arbre tournant 21.

On peut noter que l'outil de travail mobile 31 présente une gorge en creux au niveau de la tige insérée dans l'alésage de l'arbre tournant 21. De son côté, l'arbre tournant comprend un organe élastique 28 qui débouche dans l'alésage de l'arbre tournant 21 au niveau de la gorge en creux de l'outil de travail mobile 31, pour exercer un effort de maintien en position, en particulier selon l'axe vertical z de la figure 6. En variante, on pourrait prévoir que la forme de l'outil de travail mobile 31 est prévue pour le plaquer contre le fond de la cuve de travail 11, et l'organe élastique 28 ne serait pas nécessaire. Par ailleurs, pour procurer l'entraînement en rotation de l'outil de travail mobile 31, l'alésage de l'arbre tournant 21 peut être non circulaire, avec un index, et en tout état de cause avec un arrêt en rotation entre l'outil de travail mobile 31 et l'arbre tournant 21. Dans une autre variante, l'organe élastique 28 pourrait être disposé sur l'outil de travail mobile 31 et l'arbre tournant pourrait présente une gorge débouchant dans l'alésage de l'arbre tournant 21, l'organe élastique étant agencé pour coopérer avec la gorge pour exercer un effort de maintien en position, en particulier selon l'axe vertical z.

Afin de prévenir tout fuite depuis le fond de la cuve de travail 11, en plus du joint statique de cage 26, on peut prévoir :
- un joint torique 42 logé entre la cage statique 23 et la tige de l'outil de travail mobile 31 insérée dans l'alésage de l'arbre tournant 21, et/ou
- un joint tournant de cage 41 (ici un joint à lèvre) logé entre la cage statique 23 et l'arbre tournant 21 ; et/ou
- un joint torique 43 logé entre le palier lisse 25 et l'arbre tournant 21.
Bien entendu, on peut faire varier la forme, la matière et le type des joints en fonction des vitesses de rotation et/ou des matières, et/ou des contraintes de pression et/ou de température par exemple

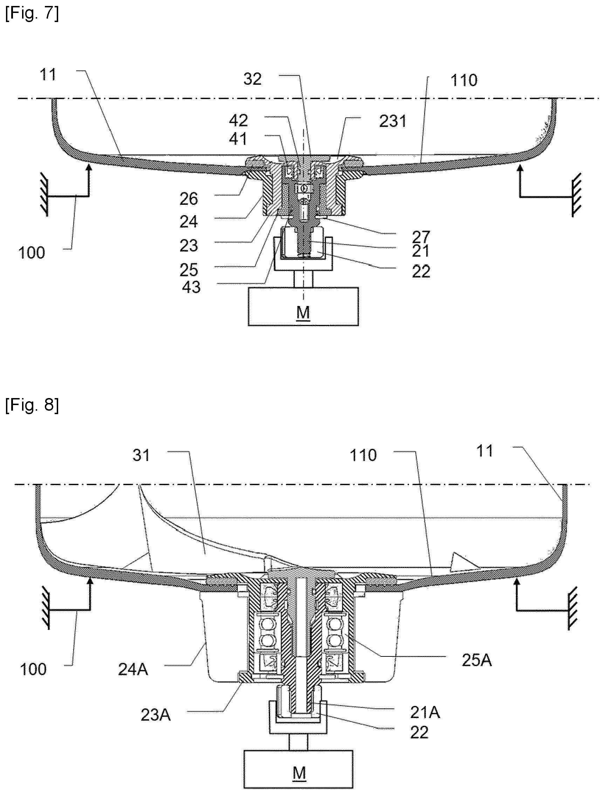

La figure 7 représente le même ensemble de cuve de travail que la figure 6, mais avec l'outil de travail mobile 31 retiré et remplacé par le bouchon d'obturation 32. On peut noter que le bouchon d'obturation 32 ne s'insère pas dans l'arbre tournant 21, et qu'il n'est engagé que dans l'alésage supérieur formé par une jupe ou un retour de la cage statique 23. En conséquence, le bouchon d'obturation 32 est statique par rapport à la cuve de travail 11 tandis que l'arbre tournant 21 demeure quant à lui mobile. Cependant, la même structure d'étanchéité est prévue qu'à la figure 6 afin de prévenir toute fuite par le mécanisme représenté. On peut noter que la cage statique 23 comprend deux évidements 231 pour former un espace et permettre de mieux saisir le bouchon d'obturation 32 lorsqu'il est en place comme sur la figure 7.

En résumé, l'utilisateur peut installer/retirer facilement l'outil de travail mobile 31 ou le bouchon d'obturation 32 sans rien démonter de l'appareil de préparation culinaire (en particulier sans démonter la cuve de travail 11 ni la cage statique 23). On peut donc noter que le système présente des mêmes moyens de fixation réversibles pour recevoir de manière réversible :
- l'outil de travail mobile 31, ou
- le bouchon d'obturation 32.
En particulier, on peut considérer que les moyens de fixation réversibles comprennent :
- un accouplement tournant (l'alésage de l'arbre tournant 21) qui reçoit l'outil de travail mobile 31, et
- un accouplement statique (l'alésage supérieur de la cage statique 23 formé par la jupe ou le retour de la cage statique 23) qui peut recevoir le bouchon d'obturation 32.

**La** cage statique 23 est attachée sur la cuve de travail 11 par l'intermédiaire du verrou 24. On peut prévoir entre la cage statique 23 et le verrou 24 un accouplement rapide, par tout type de verrouillage : par vis, par rotation ¼ de tour, par baïonnette... Pour démonter la cage statique 23, il faut donc soulever la cuve de travail 11 pour accéder au verrou 24. Encore une fois, cette opération de démontage de la cage statique 23 n'est pas nécessaire pour démonter/installer le bouchon d'obturation 32 et/ou l'outil de travail mobile 31.

Lors du fonctionnement de l'appareil de préparation culinaire, si l'outil de travail mobile 31 est installé, le moteur M peut l'entraîner en rotation (de manière continue ou intermittente) en suivant un programme de préparation culinaire, pour travailler les aliments disposés dans la cuve de travail. En revanche, si les aliments ne doivent pas être déplacés automatiquement, l'utilisateur peut libérer de la place en retirant l'outil de travail mobile 31 et en le remplaçant par le bouchon d'obturation 32, si bien que le fond 110 de la cuve de travail 11 est plat, ou sensiblement plat. On peut prévoir d'inhiber le fonctionnement du moteur M s'il est détecté par un capteur adéquat (interrupteur, capteur inductif, fibre optique...) que le bouchon d'obturation 32 est installé et/ou par la sélection d'un programme de préparation culinaire particulier. Cependant, la rotation de l'arbre tournant 21 ne perturbe pas le bouchon d'obturation.

La figure 8 représente une variante de réalisation de l'ensemble de cuve de travail de la figure 6. En effet, si on veut proposer un outil de travail avec des vitesses de rotation plus élevées, on peut prévoir une cage statique 23A qui supporte un ou plusieurs roulements à billes 25A (simple rangée de billes, double rangées, à contact oblique...).

Par ailleurs, on peut noter que la cage statique 23A supporte au dessus et en dessous du roulement à billes 25A des joints à simple ou double lèvre qui contactent l'arbre tournant 21A, assurant ainsi une bonne étanchéité même à haute vitesse de rotation. Les joints toriques montés sur l'outil de travail mobile 31 ou l'arbre tournant 21A sont en contact avec des pièces sans mouvement relatif, ce qui garantit ici encore une bonne étanchéité.

On peut encore noter que l'arbre tournant 21A présente un alésage central traversant, ce qui peut faciliter le nettoyage.

Enfin**,** la cage statique 23A est toujours verrouillée sur la cuve de travail 11 par le verrou 24A.

### Application industrielle

Un ensemble de cuve de travail et/ou un appareil de préparation culinaire comprenant un ensemble de cuve de travail selon la présente invention, et sa fabrication, sont susceptibles d'application industrielle.

**On** comprendra que diverses modifications et/ou améliorations évidentes pour l'homme du métier peuvent être apportées aux différents modes de réalisation de l'invention décrits dans la présente description sans sortir du cadre de l'invention. En particulier, on peut noter que l'outil de travail mobile 31 forme une pale de brassage, mais on peut prévoir toute sorte d'outil de travail, comme un couteau, un hachoir, un bras de pétrissage...

La cuve de travail 11 est représentée sous la forme générale d'un bol, mais on peut prévoir des moyens de chauffage, une double paroi, des plateaux ou des étages pour recevoir des aliments à préparer de manière spécifique.

L'outil de travail mobile 31 et/ou le bouchon d'obturation 32 peuvent être réalisés en matière plastique, en polymère, en métal, en métal revêtu... c'est-à-dire en toute matière compatible avec des matières alimentaires.

## Revendications

1. Ensemble de cuve de travail pour un appareil de préparation culinaire, comprenant :
- une cuve de travail (11), agencée pour recevoir des aliments à préparer, et comprenant :
• un trou de passage (111), agencé au fond de la cuve de travail (11),
• un palier de cuve, fixé à la cuve de travail (11) dans le trou de passage (111),
- un arbre tournant (21 ; 21A), supporté par le palier de cuve,
**caractérisé en ce que** l'ensemble de cuve de travail comprend des moyens de fixation réversible agencés pour recevoir de manière réversible :
• un outil de travail mobile (31) agencé pour s'accoupler avec l'arbre tournant (21 ; 21A) pour occuper une position de travail, ou
• un bouchon d'obturation (32) agencé pour recouvrir l'arbre tournant (21 ; 21A).

2. Ensemble de cuve de travail selon la revendication 1, dans lequel les moyens de fixation réversible comprennent :
- un accouplement tournant, solidaire de l'arbre tournant (21 ; 21A) et agencé pour s'accoupler de manière réversible avec l'outil de travail mobile (31),
- un accouplement statique, solidaire de la cuve de travail (11) et agencé pour s'accoupler de manière réversible avec le bouchon d'obturation (32).

3. Ensemble de cuve de travail selon la revendication 2, dans lequel l'accouplement tournant est formé par un alésage tournant ménagé dans l'arbre tournant (21 ; 21A) et comprend de préférence un arrêt en rotation entre l'outil de travail mobile (31) et l'arbre tournant (21 ; 21A).

4. Ensemble de cuve de travail selon la revendication 3, dans lequel au moins l'un de l'arbre tournant (21 ; 21A) et de l'outil de travail mobile (31) comprend un organe élastique (28) débouchant dans l'alésage tournant et agencé pour maintenir l'outil de travail mobile (31) dans une position d'accouplement avec l'arbre tournant (21 ; 21A).

5. Ensemble de cuve de travail selon la revendication 4, dans lequel au moins l'autre de l'arbre tournant (21 ; 21A) et de l'outil de travail mobile (31) présente un relief, de préférence en creux, agencé en regard de l'organe élastique (28) lorsque l'outil de travail mobile (31) est accouplé en position de travail avec l'arbre tournant (21 ; 21A).

6. Ensemble de cuve de travail selon l'une des revendications 1 à 5, comprenant une cage statique (23 ; 23A) agencée pour s'accoupler de manière réversible à la cuve de travail (11), dans lequel la cage statique (23 ; 23A) supporte le palier de cuve.

7. Ensemble de cuve de travail selon la revendication 6 dans sa dépendance à l'une des revendications 2 à 5, dans lequel la cage statique (23 ; 23A) comprend l'accouplement statique.

8. Ensemble de cuve de travail selon l'une des revendications 6 ou 7, comprenant un verrou (24 ; 24A), agencé pour s'engager de manière réversible avec la cage statique (23 ; 23A).

9. Ensemble de cuve de travail selon l'une des revendications 6 à 8, dans lequel la cage statique (23 ; 23A) présente un épaulement avec une face supérieure agencée dans la cuve de travail (11), et dans lequel le fond de la cuve de travail (11) présente un renfoncement autour du trou de passage (111) pour recevoir l'épaulement, avec de préférence une profondeur du renfoncement prévue pour positionner la face supérieure de l'épaulement de la cage statique (23 ; 23A) au niveau du reste du fond de la cuve de travail (11).

10. Ensemble de cuve de travail selon la revendication 9, dans lequel la face supérieure de la cage statique (23 ; 23A) comprend au moins un évidement (231) pour permettre à un utilisateur de saisir le bouchon d'obturation (32) afin de le dégager des moyens de fixation réversible.

11. Ensemble de cuve de travail selon l'une des revendications 6 à 10, comprenant un joint statique de cage (26), agencé entre la cuve de travail (11) et la cage statique (23 ; 23A).

12. Ensemble de cuve de travail selon l'une des revendications 6 à 11, dans lequel au moins l'un de la cuve de travail (11) et la cage statique (23 ; 23A) comprend des moyens d'arrêt en rotation, tels qu'un évidement, une encoche, une contreforme, agencés pour procurer un blocage en rotation de la bague statique sur la cuve de travail (11).

13. Ensemble de cuve de travail selon l'une des revendications 6 à 12, comprenant au moins un joint tournant de cage (41), agencé entre la cage statique (23 ; 23A) et l'arbre tournant (21 ; 21A), et de préférence entre l'arbre tournant (21 ; 21A) et une paroi de la cage statique (23 ; 23A) formant l'accouplement statique.

14. Ensemble de cuve de travail selon l'une des revendications 1 à 13, dans lequel le palier de cuve comprend un palier lisse et/ou au moins un roulement à billes, tel qu'un roulement à contact oblique.

15. Ensemble de cuve de travail selon l'une des revendications 1 à 14, dans lequel l'arbre tournant (21 ; 21A) présente un trou traversant.

16. Ensemble de cuve de travail selon l'une des revendications 1 à 15, comprenant au moins un joint de palier, agencé entre le palier de cuve et l'arbre tournant (21 ; 21A).

17. Ensemble de cuve de travail selon l'une des revendications 1 à 16, comprenant une noix d'entrainement (22) accouplée à l'arbre tournant (21 ; 21A).

18. Ensemble de cuve de travail selon l'une des revendications 1 à 17, comprenant le bouchon d'obturation (32) et un joint fixe de bouchon, agencé entre le bouchon d'obturation (32) et les moyens de fixation réversible.

19. Ensemble de cuve de travail selon l'une des revendications 1 à 18, comprenant l'outil de travail mobile (31) et un joint primaire d'outil, agencé entre l'outil de travail mobile (31) et les moyens de fixation réversible.

20. Appareil de préparation culinaire, comprenant
- un ensemble de cuve de travail selon l'une des revendications 1 à 19,
- le bouchon d'obturation (32),
- l'outil de travail mobile (31).
